Europäisches Patentamt

European Patent Office

Office européen des brevets

(19)

(11) Veröffentlichungsnummer: **0 254 292 B1**

(12) # EUROPÄISCHE PATENTSCHRIFT

(45) Veröffentlichungstag der Patentschrift: **15.04.92**

(51) Int. Cl.5: **F02B 37/00**, F04B 9/12, F01B 11/00

(21) Anmeldenummer: **87110608.4**

(22) Anmeldetag: **22.07.87**

(54) **Durch Abgasimpulse einer Verbrennungskraftmaschine antreibbarer Kolbenlader.**

(30) Priorität: **24.07.86 DE 3625050**

(43) Veröffentlichungstag der Anmeldung:
**27.01.88 Patentblatt 88/04**

(45) Bekanntmachung des Hinweises auf die
Patenterteilung:
**15.04.92 Patentblatt 92/16**

(84) Benannte Vertragsstaaten:
**DE FR GB IT SE**

(56) Entgegenhaltungen:
**EP-A- 0 126 466      DE-A- 2 139 932**
**FR-A- 781 790        GB-A- 815 494**
**GB-A- 2 003 545      US-A- 3 421 448**
**US-A- 4 166 410**

(73) Patentinhaber: **Schatz, Oskar, Dr.-Ing.**
**Waldpromenade 16**
**W-8035 Gauting(DE)**

(72) Erfinder: **Schatz, Oskar, Dr.-Ing.**
**Waldpromenade 16**
**W-8035 Gauting(DE)**

(74) Vertreter: **Lamprecht, Helmut, Dipl.-Ing.**
**Corneliusstrasse 42**
**W-8000 München 5(DE)**

EP 0 254 292 B1

## Beschreibung

Die Erfindung betrifft einen durch die Abgasenergie einer Verbrennungskraftmaschine antreibbaren Kolbenlader, der mindestens einen durch einen beweglichen Arbeitskolben begrenzten Entspannungsraum aufweist, dessen dem Kolben gegenüberliegende Begrenzung mit mindestens einem Abgaseinlaß und mindestens einem Abgasauslaß versehen ist, wobei der Abgasauslaß mit einem steuerbaren, einen seinen Querschnitt zumindest teilweise öffnenden und schließenden, beweglichen Ventilkörper aufweisenden Ventil versehen ist

Damit die arbeitsfähige Energie der am Kolbenlader eintreffenden Abgase optimal genützt werden kann, ist eine Steuerung des Abgasauslasses erforderlich, weil andernfalls ein Großteil der Abgase aus dem Entspannungsraum ausfließen kann, ohne Arbeit zu verrichten. Ein Ventil im Abgasauslaß bei einem abgasgetriebenen Kolbenlader ist in der DE-OS 33 18 136 erwähnt, ohne daß jedoch erläutert ist, wie dessen Steuerung ausgeführt werden soll.

Bekannte Kolbenmaschinen für den Betrieb durrch die Abgase einer Verbrennungskraftmaschine besitzen auf der Auslaßseite eine Ventilsteuerung, die direkt vom Verbrennungsmotor angetrieben wird. Dies führt zu komplexen und dadurch teueren Konstruktionen, die außerdem die Freizügigkeit bei der räumlichen Anordnung der Kolbenmaschine relativ zur Verbrennungskraftmaschine behindern. Wirkt die Kolbenmaschine als Hilfsmaschine mit der Verbrennungskraftmaschine zu-sammen, insbesondere als Lader, so ist eine Anpassung der Kolbenmaschine an die Betriebszustände der Verbrennungskraftmaschine erwünscht, die bei einer Ventilsteuerung direkt von der Verbrennungskraftmaschine aus nicht automatisch durchführbar is, es sei denn, durch eine zusätzliche, teuere Steuerung.

Der Erfindung liegt die Aufgabe zugrunde, mit möglichst geringem Aufwand eine zuverlässige Steuerung des Kolbenladers zur optimalen Ausnützung der arbeitsfähigen Energie der Abgasimpulse der Verbrennungskraftmaschine zu ermöglichen, wobei zugleich eine automatische Anpassung des Kolbenladers an den herrschenden Betriebszustand der Verbrennungskraftmaschine erreichbar sein soll. Außderdem soll durch einfache konstruktive Änderungen eine optimale Anpassung an die jeweiligen Einsatzbedingungen möglich sein.

Die Lösung besteht bei einem Kolbenlader der eingangs genannten Art darin, daß der Ventilkörper am Arbeitskolben auf dessen dem Abgasauslaß zugewandter Seite angeordnet ist und zumindest während eines Teils der Kolbenbewegung in einen einen Ventilabschnitt bildenden Teil des Abgasauslaßes hineinragt und dessen Querschnitt zumindest teilweise ausfüllt, wodurch das Ventil im Takt der Abgasimpulse der Verbrennungskraftmaschine gesteuert wird.

Beim Eintreffen eines Abgasimpulses wird der Arbeitskolben von der mit Abgaseinlaß und Abgasauslaß versehenen Begrenzung des Entspannungsraums abgehoben, wodurch der Ventilkörper seine Eindringtiefe in den Abgasauslaß verringert. Sobald der Kolbenhub die maximale Eindringtiefe des Ventilkörpers in den Abgasaulaß übersteigt, verläßt der Ventilkörper den Abgasauslaß und gibt dessen gesamten Querschnitt frei, so daß das Abgas ungehindert abströmen kann, bis der Ventilkörper beim Rückhub des Arbeitskolbens wieder in den Abgasauslaß eindringt. Zeitlicher Verlauf und arbeitsfähige Energie der Abgasimpulse sind vom Betriebszustand der Verbrennungskraftmaschine abhängig. Durch die erfindungsgemäße Konstruktion erfolgt die Steuerung und Betätigung des Ventils am Abgasauslaß des Kolbenladers durch die Abgasimpulse der Verbrennungskraftmaschine und in Abhängigkeit von deren jeweiligem Betriebszustand, wobei der konstruktive Aufwand sehr gering ist und sich auf die Anordnung der des Ventilkörpers am Arbeitskolben und die Anpassung der Querschnitte des Ventilkörpes und des Abgasauslasses beschränkt. Außer der Abgasleitung ist keine weitere, durch die Ventilsteuerung bedingte Verbindung zur Verbrennungskraftmaschine erforderlich, so daß eine große Freizügigkeit hinsichtlich der räumlichen Anordnung besteht. Schließlich sind keine zusätzlichen Teile erforderlich, so daß eine hohe Zuverlässigkeit der Ventilsteuerung sichergestellt ist.

Aus der GB-A-815 494 ist ein Zweitaktmotor mit Spülgebläse bekannt, wobei im Beispiel nach Fig. 9 zur Spülung des Zylinders eine Kolbenpumpe mit einem Stufenkolben eingesetzt wird. Die aus dem Motorzylinder austretenden Abgase verschieben in einem Zylinder den Kolbenabschnitt mit geringem Durchmesser, der fest mit einem zur Förderung der Spülluft dienenden Kolbenabschnitt großen Durchmessers verbunden ist. In bekannter Weise wird bei Vollendung des durch die Abgasentspannung bewirkten Hubs des Kolbens ein Auslaßschlitz für das Abgas geöffnet. Sobald der Abgasdruck nach öffnung dieses Auslaßschlitzes ausreichend abgesunken ist, drückt der in einer Kompressionskammer erzeugte Gegendruck den Stufenkolben wieder in seine Ausgangsstellung zurück, wobei der Auslaßschlitz bei der gleichen Stellung des Stufenkolbens geöffnet bzw. geschlossen wird.

Der Auslaßschlitz stellt die Verbindung zu einem sich seitlich vom Zylinder weg erstreckenden Abgasauslaßkanal her.

Im Gegensatz dazu ist bei der erfindungsgemäßen Konstruktion der Abgasauslaß ein sich in der Bewegungsrichtung des Arbeitskolbens erstrekkender Kanal in den ein am Arbeitskolben angeordneter Ventilkörper in Abhängigkeit von der Kolbenbewegung mehr oder weniger eintaucht bzw. dessen Querschnitt zur vollen Öffnung des Auslaßventils von diesem Ventilkörper völlig freigegeben wird.

Damit kann im Gegensatz zu der Konstruktion nach der GB-A-815 494 erreicht werden, daß durch einen sich in Richtung des Arbeitskolbens verändernden Querschnitt des Ventilkörpers nach einer vorgegebenen Gesetzmässigkeit in Abhängigkeit vom Weg des Arbeitskolbens der Öffnungsquerschnitt des Auslaßventils verändert wird.

Die DE-A-23 39 932 zeigt eine Pumpe, die durch die Abgase eines Verbrennungsmotors betrieben wird. Es fehlt jedoch der kleinste Hinweis darauf, daß der Pumpe das Abgas taktweise in Form einzelner Abgasimpulse zugeführt wird. Die Pumpe ist vielmehr so gestaltet, daß sie durch Abgas betrieben werden kann, das der Pumpe über eine Abgasleitung mit gleichbleibendem Druck zugeführt wird, wie es etwa bei Vielzylindermotoren oder bei Verwendung eines Abgassammlers oder auch bei relativ großen schädlichen Räumen zur Verfügung steht.

Die Konstruktion nach der DE-A-21 39 932 ist deshalb so ausgeführt, daß das taktweise Arbeiten der Pumpe durch die in der Pumpe selbst vorhandenen Einrichtungen verursacht wird. Der Schließkörper wird durch die Einwirkung von Anschlägen unter Vermittlung eines Steuerhebels zwischen zwei stabilen Endstellungen bewegt, in welchen er abwechselnd den Einlaß und den Auslaß verschließt. Damit ist die Ventilbewegung von der Kolbenbewegung abhängig, die ihrerseits durch die arbeitsfähige Energie des Abgases erzeugt wird, die jedoch nicht notwendigerweise taktweise im Bereich des Einlasses ankommen muß, vielmehr wird sie durch die Bewegung des Schließkörpers taktweise aus dem Einlaß in den Pumpenzylinder entlassen und erzeugt so die taktweise Kolbenbewegung. Bei taktweise ankommenden Abgasen besteht sogar die Möglichkeit, daß die Taktsteuerung des Kolbens und der Takt der Abgase so gegeneinander phasenverschoben sind, daß das Maximum der Abgasdruckwelle bei geschlossenem Einlaßventil ankommt.

Die Ventilöffnungszeiten sind bei der bekannten Konstruktion von der Kolbenbewegung abhängig, so daß also der Kolbentakt vom Ventiltakt und umgekehrt der Ventiltakt vom Kolbentakt abhängig ist, woraus sich ergibt, daß der Rhythmus der Kolbenbewegung letzten Endes vom am Einlaßventil anstehenden Abgasdruck und dem der Kolbenbewegung entgegenstehenden Widerstand abhängig sein wird.

Da die Bauform der Pumpe darauf abgestellt ist, daß bei der durch die Kolbenbewegung verursachten Öffnung des Einlaßventils ein ausreichender Abgasdruck zur Verfügung steht, ist es eher nachteilig, wenn der Abgasdruck in Form von Impulsen vor dem Einlaßventil zur Verfügung steht, vielmehr sollte dort ein möglichst gleichförmiger, ausreichend hoher Druck zur Verfügung stehen.

Da die in der DE-A-21 39 932 dargestellte und beschriebene Pumpe keine Einrichtung erkennen läßt, die geeignet wäre, den Rhythmus der Kolbenbewegung mit der Zündfrequenz des das Abgas liefernden Motors zu synchronisieren, eignet sie sich als Lader nur dann, wenn ihr ein ausreichend großer Speicher nachgeschaltet wird, wodurch aber der Vorteil eines Kolbenladers verloren geht, der darin besteht, daß der Lader direkt in den zu ladenden Motorzylinder fördern kann.

Die bekannte Pumpe ist nicht nur zum Fördern gasförmiger, sondern auch flüssiger Medien bestimmt. Daraus und auch aus der Tatsache, daß die Pumpe einen Hochdruck- wie auch einen Niederdruckförderteil umfaßt, kann geschlossen werden, daß diese Pumpe nicht als Lader bestimmt ist.

Nach einer vorteilhaften Ausgestaltung verändert sich bei vollständig in den zur Aufnahme des Ventilkörpers bestimmten Ventilabschnitt des Abgasauslasses eingeführtem Ventilkörper der Abstand zwischen dem Umfang des Ventilkörpers und der Begrenzung des Ventilabschnitts in Bewegungsrichtung des Arbeitskolbens. Dadurch kann der Ausströmquerschnitt in Abhängigkeit von der Bewegung des Arbeitskolbens stetig oder stufenweise verändert werden, um eine optimale Anpassung an die jeweiligen Einsatzbedingungen zu erreichen. So kann z.B. bei der Endstellung des Arbeitskolbens, bei welcher der Ventilkörper voll in den Ventilabschnitt eingeführt ist, zwischen dem Umfang des Ventilkörpers und der Begrenzung des Ventilabschnitts ein Ausströmspalt geöffnet sein, um im Leerlauf der Verbrennungskraftmaschine, in welchem kein Laderbetrieb erforderlich ist, bzw. in den Wartepausen des Arbeitskolbens, das ungehinderte Abströmen des Abgases zu ermöglichen, während die mit steigender Belastung der Verbrennungskraftmaschine zunehmende Arbeitsenergie den Arbeitskolben aus dem unteren Wendepunkt bewegen und dadurch aufgrund der Querschnittsunterschiede den Spaltquerschnitt verringern wird, um die Abgasenergie optimal für den Betrieb des Kolbenladers auszunützen, bis kurz vor dem Erreichen des oberen Wendepunkts die Ausformung den Ventilabschnitt verläßt und damit dessen vollen Querschnitt für das Ausströmen des entspannten Abgases freigibt.

Anhand der nun folgenden Beschreibung der in der Zeichnung dargestellten Ausführungsbeispiele der Erfindung wird diese näher erläutert.

Es zeigt:

Fig. 1            einen schematischen Axialschnitt durch den Zylinder einer als Lader dienenden Kolbenmgschine, wobei sich der Arbeitskolben im unteren Wendepunkt befindet,

Fig. 2 einen der Fig. 1 ähnlichen Axialschnitt, wobei sich der Arbeitskolben im oberen Wendepunkt befindet,

Fig. 3 einen der Fig. 1 ähnlichen Axialschnitt durch eine etwas geänderte Ausführungsform,

Fig. 4 einen der Fig. 3 ähnlichen Axialschnitt durch eine weitere Ausführungsform und

Fig. 5a bis 5k Varianten der Querschnittsgestaltung im Ventilabschnitt des Abgasauslasses.

Ein Zylinder einer als abgasgetriebener Lader einer Verbrennungskraftmaschine einzusetzenden Kolbenmaschine ist mit 10 bezeichnet und enthält einen flachen Arbeitskolben 12, der mit einer Kolbenstange 14 verbunden ist, die aus dem Zylinder 10 herusragt und außerhalb des Zylinders 10 in einer Führung 16 linear beweglich geführt ist. Der Zylinder 10 wird von einer oberen Stirnfläche 18 begrenzt, durch welche die Kolbenstange 14 nach außen geführt ist, und durch eine untere Stirnfläche 20.

Die obere Stirnfläche ist mit einem Ladelufteinlaßventil 22 und einem Ladeluftauslaßventil 24 versehen, die als Rückschlagventile ausgeführt sind.

Die untere Stirnfläche 20 ist mit einem Abgaseinlaß 26 und einem Abgasauslaß 28 versehen. Der Abgasauslaß 28 ist in Bezug auf die Zylinderachse konzentrisch angeordnet, der Abgaseinlaß 26, der über eine Leitung 30 mit Abgasimpulsen von einer nicht dargestellten Verbrennungskraftmaschine versorgt werden kann, befindet sich seitlich vom Abgasauslaß.

Eine Rückstelleinrichtung, welche schematisch in Form einer auf die Kolbenstange 14 einwirkenden Druckfeder 32 dargestellt ist, ist bestrebt, den Arbeitskolben 12 in seinen unteren, dem Abgaseinlaß 26 und dem Abgasauslaß 28 benachbarten Wendepunkt zu überführen.

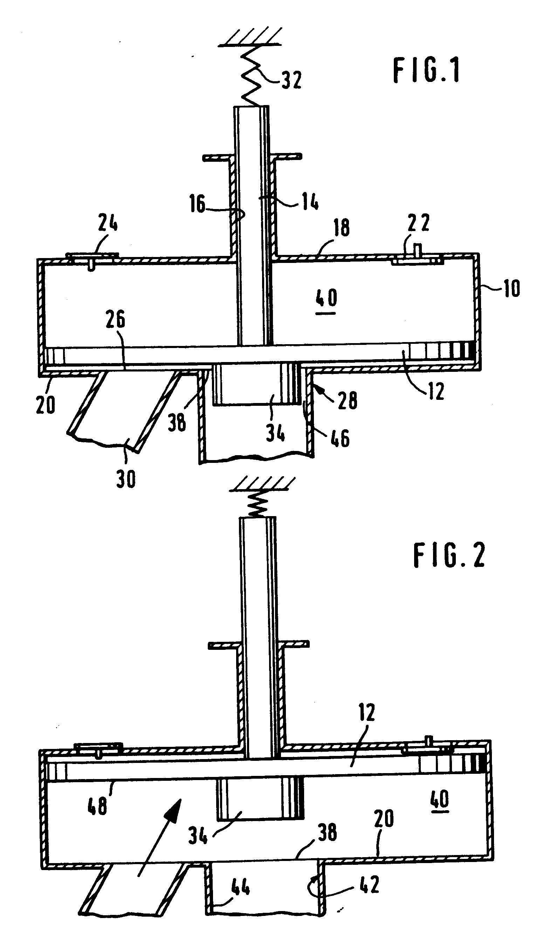

Trifft in dieser in Fig. 1 gezeigten Stellung des Arbeitskolbens 12 über die Leitung 30 ein Abgasimpuls am Abgasauslaß 26 ein, der über ausreichende arbeitsfähige Energie verfügt, so wird der Arbeitskolben 12 in seinen in Fig. 2 gezeigten oberen Wendepunkt bewegt, sofern die arbeitsfähige Energie des Abgasimpulses durch Entspannung des Abgases im Zylinder 10 nutzbar gemacht werden kann. Es muß also verhindert werden, daß das Abgas ungenützt aus dem Abgasauslaß 28 abfließen kann.

Zu diesem Zweck ist an der der unteren Stirnfläche 20 des Zylinders 10 zugewandten Seite des Arbeitskolbens 12 dieser mit einem Ventilkörper 34 versehen, der im unteren Wendepunkt des Arbeitskolbens 12 in den Abgasauslaß 28 hineinragt. Im Bereich des Abgasauslasses 28 schließt sich an dessen Mündung 38 in den Innenraum 40 des Zylinders 10 ein in Richtung des Kolbenhubs verlaufender Ventilabschnit 42 an, in den der Ventilkörper 34 auf eine gewisse Länge eindringt, wenn sich der Arbeitskolben 12 im unteren Wendepunkt befindet.

Dadurch wird erreicht, daß der Ventilkörper 34 den Querschnitt des Ventilabschnitts 42 bzw. des Abgasauslasses 28 so lange zumindest annähernd schließt, bis der Arbeitskolben 12 einen wesentlichen Teil seines vom unteren zum oberen Wendepunkt führenden Arbeitshubs durchgeführt hat.

In den Fig. 1 und 2 ist der Ventilabschnitt 42 von einer zylindrischen Wandung 44 begrenzt und der Ventilkörper 34 am Arbeitskolben 12 ist ebenfalls zylindrisch ausgebildet, jedoch mit etwas kleinerem Durchmesser als dem der Wandung 44, so daß dann, wenn sich der Ventilkörper 34 ganz oder teilweise im Bereich des Ventilabscnitts 42 befindet, zwischen der Wandung 44 un dem zylindrischen Umfang des Ventilkörpers 34 ein ringförmiger Spalt 46 geöffnet bleibt. Der Spalt 46 ist so bemessen, daß daß das zwischen den aufeinanderfolgenden Abgasimpulsen während der gewollten Wartestellung des Arbeitskolbens 12 von der Verbrennungskraftmaschine noch ausgeschobene oder bei Leerlauf anfallende Abgas ohne Betätigung des Arbeitskolbens 12 durch den Spalt 46 des Abgasauslasses 28 entweichen kann.

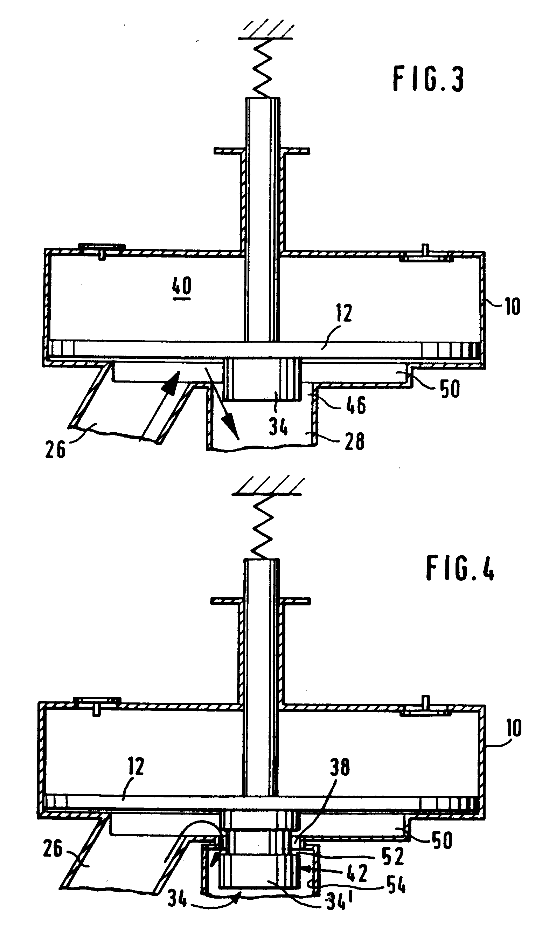

Damit der dem Abgaseinlaß 26 und dem Abgasauslaß 28 zugewandte Kolbenboden 48 das überströmen des Abgases vom Abgaseinlaß 26 zum Abgasauslaß 28 während des Leerlaufbetriebs bzw. während der gewollten Wartestellung des Arbeitskolbens 12 nicht behindert, kann eine geeignete Profilierung im Kolbenboden 48 oder der unteren Stirnfläche 20 vorgesehen sein. Die Fig. 3 zeigt zu diesem Zweck eine in der unteren Strinfläche 20 ausgebilete und zur Zylinderachse konzentrisch angeordnete Vertiefung 50, in welche der Abgaseinlaß 26 und der Abgasauslaß 28 münden.

Der Spalt 46 ist von Bedeutung, wenn der Arbeitskolben 12 sich im unteren Wendepunkt befindet. Sobald die arbeistfähige Energie des eintreffenden Abgasimpulses genützt werden soll, um den Arbeitskolben 12 gegen den oberen Wendepunkt zu bewegen, soll diese Energie möglichst optimal nutzbar gemacht werden. Es ist also erwünscht, daß sich der Abgasauslaß 28 möglichst vollständig schließt, sobald sich der Arbeitskolben 12 aus seiner unteren Endstellung bewegt. Die Fig. 4 zeigt eine Ausbildung des Ventilkörpers 34 und des Ventilanbschnitts 42, die dieser Forderung entspricht. Die Mündung 38 des Ventilabschnitts 42 ist als Einschnürung ausgebildet, die an den Durchmesser des zylindrischen Ventilkörpers 34 angepaßt ist, um dadurch den Durchfluß durch den Abgasauslaß 28 weitgehend unterbinden zu können, wenn der Ventilkörper 34 in den eingeschnürten Bereich der Mündung 38 eingreift. Jedoch ist der Ventilkörper 34 mit einer ringförmigen Nut 52 versehen, deren axiale Ausdehnung größer ist als die der eingeschnürten Mündung 38 und die in axialer Richtung mittig zur eingeschnürten Mündung 38 ausgerichtet ist, wenn sich der Arbeitskolben 12 im unteren Wendepunkt befindet, so daß die Nut 52 eine Umströmung der Einschnürung ermöglicht. In Durchströmrichtung folgt auf die eingeschnürte Mündung 38 eine Querschnittserweiterung 54 des Ventilabschnitts 42, so daß ein den ungehinderten Abgasabfluß ermöglichender Ringspalt 46 zwischen dieser Querschnittserweiterung 54 und der zylindrischen Außenfläche des sich an der vom Arbeitskolben 12 abgelegenen Seite der Nut 52 erstreckenden Abschnitts 34' des Ventilkörpers 34 befindet.

Wird der Arbeitskolben 12 gegen den oberen Wendepunkt bewegt, dringt dieser Abschnitt 34' in den eingeschnürten Bereich der Mündung 38 ein und verhindert solang das Abströmen von Abgas aus dem Zylinder 10, bis der Ventilkörper 34 den Ventilabschnitt 42 völlig verlassen hat. Diese Öffnung des Abgasauslasses 28 erfolgt bereits vor dem Erreichen des oberen Wendepunkts, so daß auch beim Rückhub des Arbeitskolbens 12 der Abgasauslaß zunächst geöffnet bleibt, um das Abströmen des entspannten Abgases zu ermöglichen.

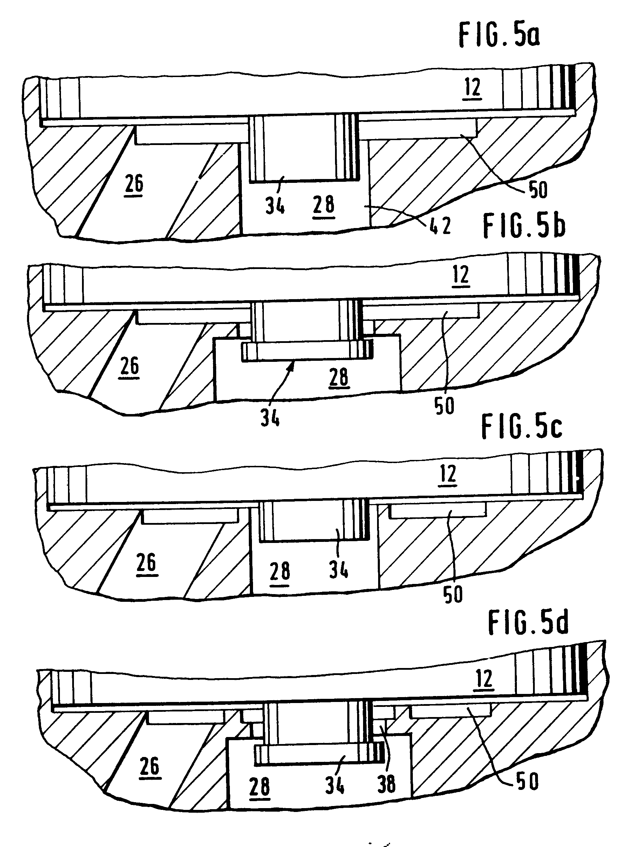

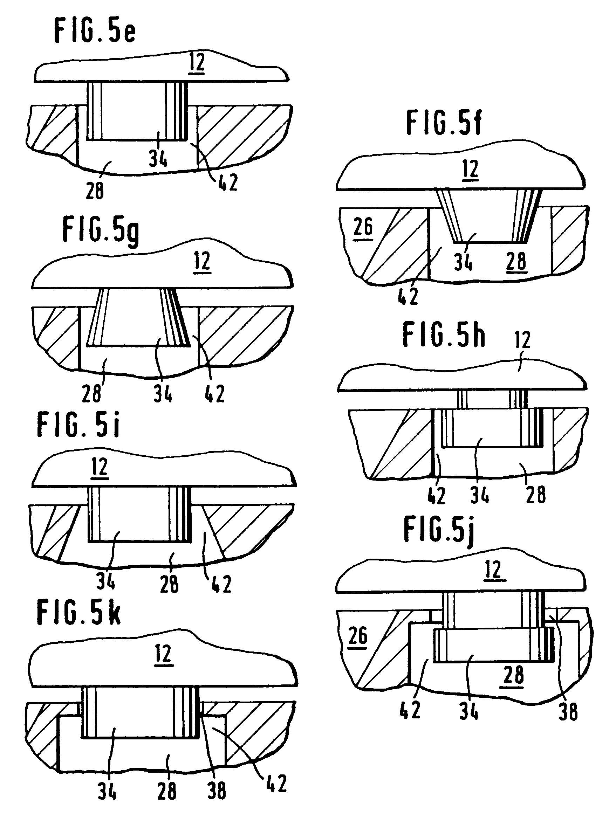

Die Fig. 5a bis 5k zeigen, daß mannifaltige Möglichkeiten bestehen, um durch entsprechende Profilierungen des Ventilabschnitts 42 und/oder des Ventilkörpers 34 - auch unter Berücksichtigung der Bewegung des Arbeitskolbens - je nach den betrieblichen Erfordernissen unterschiedliche Strömungsbedingungen im Bereich des Abgasauslasses 28 zu erreichen. Insbesondere läßt sich durch Veränderung des Spaltquerschnitts zwischen dem in den Ventilabschnitt 42 eintauchenden Ventilkörper 34 und der Wandung des Ventilabschnitts 42 der Durchflußbeiwert beeinflussen.

## Patentansprüche

1. Durch die Abgasenergie einer Verbrennungskraftmaschine antreibbarer Kolbenlader, der mindestens einen durch einen beweglichen Arbeitskolben (12) begrenzten Entspannungsraum (40) aufweist, dessen dem Kolben (12) gegenüberliegende Begrenzung mit mindestens einem Abgaseinlaß (26) und mindestens einem Abgasauslaß (28) versehen ist, wobei der Abgasauslaß (28) mit einem steuerbaren, einen seinen Querschnitt zumindest teilweise öffnenden und schließenden, beweglichen Ventilkörper (34) aufweisenden Ventil versehen ist, *dadurch gekennzeichnet,* daß der Ventilkörper (34) am Arbeitskolben (12) auf dessen dem Abgasauslaß (28) zugewandter Seite angeordnet ist und zumindest während eines Teils der Kolbenbewegung in einen einen Ventilabschnitt (42) bildenden Teil des Abgasauslaßes (28) hineinragt und dessen Querschnitt zumindest teilweise ausfüllt wodurch das Ventil im Takt der Abgasimpulse der Verbrennungskraftmaschine gesteuert wird.

2. Kolbenlader nach Anspruch 1, *dadurch gekennzeichnet,* daß sich bei vollständig in den zur Aufnahme des Ventilkörpers (34) bestimmten Ventilabschnitt (42) des Abgasauslasses (28) eingeführtem Ventilkörper (34) der Abstand zwischen dem Umfang des Ventilkörpers (34) und der Begrenzung (44) des Ventilabschnitts (42) in Bewegungsrichtung des Arbeitskolbens (12) verändert.

3. Kolbenlader nach Anspruch 2, *dadurch gekennzeichnet,* daß daß bei der Endstellung des Arbeitskolbens (12), bei welcher der Ventilkörper (34) voll in den Ventilabschnitt (42) eingeführt ist, zwischen dem Umfang des Ventilkörpers (34) und der Begrenzung des Ventilabschnitts (42) ein Ausströmspalt (46) geöffnet ist.

4. Kolbenlader nach Anspruch 3, *dadurch gekennzeichnet,* daß der Ausströmquerschnitt des Abgasauslasses (28) geschlossen ist, wenn der Arbeitskolben (12) seinen Arbeitshub begonnen hat und sich der Ventilkörper (34) noch im Ventilabschnitt (42) des Abgasauslasses (28) befindet.

5. Kolbenlader nach einem der Ansprüche 1 bis 4, *dadurch gekennzeichnet,* daß der Querschnitt des Ventilkörpers (34) in Bewegungsrichtung des Arbeitskolbens (12) konstant ist.

6. Kolbenlader nach einem der Ansprüche 1 bis 4, *dadurch gekennzeichnet,* daß der Querschnitt des Ventilabschnitts (42) in Bewegungsrichtung des Arbeitskolbens (12) konstant ist.

## Claims

1. A piston charger adapted to be driven by the exhaust gas energy of an internal combustion engine and which has at least one expansion space (40) delimited by a moving working piston (12), whose wall, which is opposite to the piston (12), has at least one exhaust gas inlet port (26) and at least one exhaust gas outlet port (28), the exhaust gas outlet port (28) being provided with a timed valve, which has a valve member (34) to at least partly open and close its flow area, characterized in that the valve member (34) is arranged on the working piston (12) in the side thereof adjacent to the exhaust gas outlet port (28) and at least during a part of the piston stroke extends into a part, which constitutes a valve section (42) of the exhaust gas outlet port (28), and at least partly occupies its flow area so that the valve is timed in step with the exhaust gas pulses of the internal combustion engine.

2. The piston charger as claimed in claim 1, characterized in that when the valve member (34) is completely introduced into the valve section (42), which is intended to receive the valve member (34), of the exhaust gas outlet port (28), the distance between the periphery of the valve member (34) and the wall (44) of the valve section (42) changes in the direction of the movement of the working piston (12).

3. The piston charger as claimed in claim 2, characterized in that in the terminal position of the working piston (12), in which the valve member (34) is completely introduced into the valve section (42) an outlet flow gap (46) is left between the periphery of the valve member (34) and the wall of the valve section (42).

4. The piston charger as claimed in claim 3, characterized in that the outlet flow area of the exhaust gas outlet port (12) is shut off, when the working piston (12) has commenced its working stroke and the valve member (34) is still in the valve section (42) of the exhaust gas outlet port (28).

5. The piston charger as claimed in any one of the preceding claims 1 through 4, characterized in that the cross section of the valve member (34) is constant in the direction of the movement of the working piston (12).

6. The piston charger as claimed in any one of the preceding claims 1 through 4, characterized in that the cross section of the valve section (42) is constant in the direction of the movement of the working piston (12).

**Revendications**

1. Compresseur de suralimentation à piston entraîné par l'énergie des gaz d'échappement d'un moteur à combustion interne, comportant au moins une chambre de détente délimitée par un piston de travail mobile (12) et dont la surface limite faisant face au piston (12) est pourvue d'au moins un orifice d'aadmission des gaz d'échappement (26) et d'au moins un orifice de sortie des gaz d'échappement (28), l'orifice de sortie des gaz, d'échappement étant pourvue d'une soupape commandable, présentant un clapet mobile (34) ouvrant et fermant au moins partiellement la section transversale de l'orifice de sortie, caractérisé en ce que le clapet (34) est disposé sur le côté du piston de travail (12) qui est tourné vers l'orifice de sortie des gaz d'échappement (28), il fait saillie, au moins pendant une partie de la course du piston, dans une partie de l'orifice de sortie des gaz d'échappement (28) qui forme une section de soupape (42) et il remplit au moins partiellement la section transversale de ce tronçon, si bien que la soupape est commandée à la cadence des impusions de gaz d'échappement du moteur à combustion interne.

2. Compreseur à piston suivant la revendication 1 caractérisé en ce que, lorsque le clapet (34) est introduit totalement dans la section de soupape de l'orificé de sortie des gaz destinée à recevoir le clapet (34), la distance entre la périphérie du clapet (34) et la limite (44) de la section de soupape (42) est variable dans la direction du mouvement du piston de travail (12).

3. Compresseur à piston suivant la revendication 2 caractérisé en ce que dans la position extrême du piston de travail (12) dans laquelle le clapet (34) est introduit en totalité dans la section de soupape (42), un intervalle d'écoulement vers l'exterieur (46) est ouvert entre la périphérie du clapet (34) et la limite de la section de soupape (42).

4. Compresseur à piston suivant la revendication 1 caractérisé en ce que la section transversale d'écoulement vers l'extérieur de l'orifice de sortie des gaz (28) est fermée si le piston de travail (12) a commencé sa course de travail et le clapet (34) se trouve encore dans la section de soupape (42) de l'orifice de sortie des gaz (28).

5. Compresseur á piston suivant l'une des revendications 1 à 4 caractérise en ce que la section transversale du clapet (34) est constante dans la direction du mouvement du piston de travail (12).

6. Compresseur à piston suivant l'une des revendications 1 à 4 caractérisé en ce que la section transversale le la section de soupape (42) est constante dans la direction du movement du piston de travail (12).

FIG.1

FIG.2

FIG.3

FIG.4

## FIG.5a

## FIG.5b

## FIG.5c

## FIG.5d

FIG.5e

FIG.5f

FIG.5g

FIG.5h

FIG.5i

FIG.5j

FIG.5k